Europäisches Patentamt

(19) European Patent Office

Office européen des brevets

(11) Numéro de publication : **0 179 516**
**B1**

(12) **FASCICULE DE BREVET EUROPÉEN**

(45) Date de publication du fascicule du brevet :
17.08.88

(51) Int. Cl.⁴ : **B 60 N   1/06**

(21) Numéro de dépôt : 85201602.1

(22) Date de dépôt : 03.10.85

(54) **Fauteuil pour véhicule, notamment automobile.**

(30) Priorité : 23.10.84 BE 213873

(43) Date de publication de la demande :
30.04.86 Bulletin 86/18

(45) Mention de la délivrance du brevet :
17.08.88 Bulletin 88/33

(84) Etats contractants désignés :
AT CH DE FR GB IT LI LU NL SE

(56) Documents cités :
BE-A-   897 046
DE-A- 1 405 778
DE-A- 2 420 277
DE-A- 3 000 433
DE-C- 1 111 965
US-A- 1 669 567
PATENT ABSTRACTS OF JAPAN, vol. 2, no. 132, 4
november 1978 (M-78)[4303]; JP - A - 53 100 531
(NISSAN JIDOSHA) 02-09-1978

(73) Titulaire : NEVE DE MEVERGNIES, Marcel
La Pasture
B-6419 Marbaix-la-Tour (BE)

(72) Inventeur : NEVE DE MEVERGNIES, Marcel
La Pasture
B-6419 Marbaix-la-Tour (BE)

(74) Mandataire : Callewaert, Jean et al
Bureau Gevers S.A. rue de Livourne 7 bte 1
B-1050 Bruxelles (BE)

**0 179 516**

**Description**

La présente invention est relative à un fauteuil pour véhicule, notamment automobile, comprenant un siège et un dossier, dont au moins la partie, contre laquelle repose le dos d'un passager prenant place dans le fauteuil, présente un appui monté de manière à pouvoir osciller ensemble avec le dos de ce passager, sensiblement suivant le plan du dossier et dans une direction ascendante et descendante par rapport au siège.

Un fauteuil présentant ces caractéristiques a fait l'objet du brevet belge 210 998.

Dans ce brevet, il a notamment été précisé qu'il y a lieu de veiller à réduire autant que possible l'effet d'inertie sur la partie mobile du dossier du fauteuil, lorsque celui-ci est soumis à des oscillations ascendantes et descendantes.

La raison en est que l'appui contre lequel s'applique le dos d'un passager assis dans le fauteuil devra suivre exactement le mouvement oscillatoire ascendant et descendant du dos pour obtenir l'effet bénéfique sur la colonne vertébrale.

L'objet essentiel de la présente invention est de préciser davantage les caractéristiques auxquelles le fauteuil doit répondre pour jouir pleinement de cet effet bénéfique.

En effet, il a été constaté qu'un mauvais choix de ces caractéristiques peut provoquer, au contraire, un effet néfaste sur le dos du passager au lieu de l'effet bénéfique recherché précité.

A cet effet, le fauteuil suivant l'invention est caractérisé par le fait que la partie mobile du dossier, comprenant l'appui précité, présente une fréquence propre qui soit au moins égale à 1,3 fois la fréquence propre du siège chargé du passager.

D'autres détails et particularités de l'invention ressortiront de la description, donnée ci-après, à titre d'exemple non limitatif, avec référence aux dessins annexés de deux formes de réalisation particulières de l'invention.

La figure 1 représente schématiquement et en coupe verticale un fauteuil de voiture automobile suivant une première forme de réalisation particulière de l'invention.

La figure 2 représente schématiquement et en coupe verticale un fauteuil de voiture automobile suivant une deuxième forme de réalisation particulière de l'invention.

La figure 3 est, à plus grande échelle, une coupe verticale d'une partie du fauteuil suivant une première variante de la forme de réalisation de la figure 2.

La figure 4 est, à plus grande échelle, une coupe verticale d'une partie du fauteuil suivant une seconde variante de la forme de réalisation de la figure 2.

Dans les différentes figures, les mêmes chiffres de référence désignent des éléments identiques ou analogues.

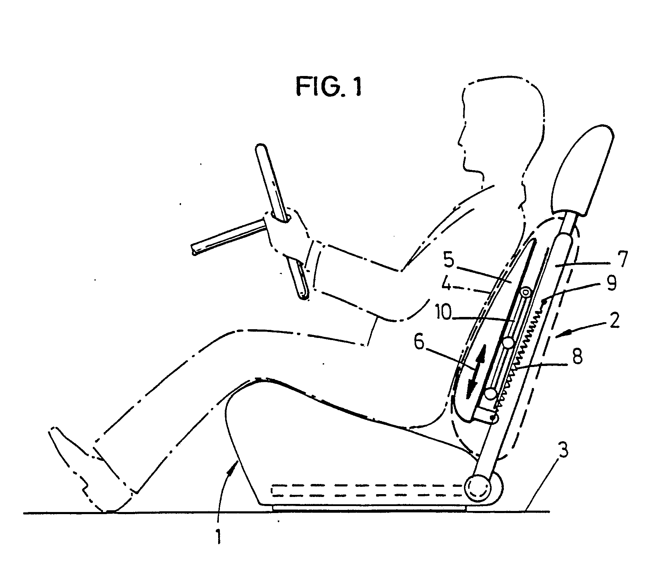

La figure 1 montre un fauteuil pour un véhicule automobile comprenant un siège 1 et un dossier 2, qui peut éventuellement être articulé sur la partie arrière du siège.

Ce siège est monté d'une manière traditionnelle sur le plancher 3 de la voiture, de sorte que les moyens de fixation de celui-ci sur ce plancher n'ont pas été représentés.

La partie du dossier, contre laquelle repose le dos 4 d'un passager prenant place dans le fauteuil, présente un appui 5 monté de manière à pouvoir osciller, ensemble avec le dos 4 du passager, sensiblement suivant le plan du dossier et dans une direction ascendante et descendante par rapport au siège, comme indiqué par les flèches 6. Il est important que cet appui 5 puisse osciller indépendamment du siège 1.

Cet appui 5, qui est réalisé en une matière relativement légère, est monté sur un cadre 7, incorporé dans le dossier et s'étendant sensiblement suivant le plan de ce dernier, par l'intermédiaire d'organes élastiques 8, notamment de ressorts, permettant à cet appui 5 d'osciller dans le sens des flèches 6 par rapport à un point fixe 9 du cadre.

L'appui 5 se déplace par rapport au cadre fixe 7 par l'intermédiaire de glissières 10 et est suspendu à ce cadre par l'intermédiaire des ressorts 8, dont la tension pourrait le cas échéant être réglable.

Avantageusement, la fréquence propre de la partie mobile du dossier 2, comprenant donc essentiellement l'appui 5 complété par la partie des glissières 10 solidaire de cet appui, est au moins égale à 1,3 fois la fréquence propre du siège 1 chargé du passager.

Ainsi, il a été constaté que lorsque la fréquence propre de la partie mobile est approximativement égale à la fréquence propre du siège chargé du passager, cette partie mobile ne suit pas le mouvement oscillatoire du dos du passager et, au lieu de donner un effet bénéfique sur le dos, provoque, au contraire, des effets néfastes qui risquent encore d'aggraver le mal au dos du passager.

Ceci est notamment dû au fait que les oscillations de la partie mobile sont, dans de telles circonstances, amplifiées par un effet de résonance, c'est-à-dire que l'amplitude de ces oscillations devient largement supérieure à celle des oscillations du siège chargé du passager.

Par contre, l'expérience avec un prototype de fauteuil, équipé d'un dossier mobile, a permis de démontrer que, si la fréquence propre de la partie mobile du dossier atteint une valeur de l'ordre de 1,3 fois la fréquence propre du siège chargé du passager, il est possible de maintenir ces oscillations parfaitement sous contrôle et d'obtenir que le dossier oscille avec la même amplitude que le dos du passager soumis à des vibrations ou des oscillations provoqués par les inégalités de la route sur laquelle

2

le véhicule se déplace.

Le résultat est d'autant meilleur que ce facteur est élevé.

Au contraire, si ce facteur descend graduellement en dessous de la valeur de 1,3, le phénomène de résonance se fait sentir de façon génante et devient graduellement néfaste.

Plus particulièrement, il a été constaté que pour un dossier mobile ayant un poids de l'ordre de grandeur d'un kilo et une suspension ayant un coefficient de friction très faible, la zone dans laquelle la résonance précitée peut se produire est très étroite, c'est-à-dire lorsque la valeur du rapport des fréquences propres descend en dessous de 1,3, l'amplitude des oscillations du dossier mobile augmente très rapidement, mais lorsque la valeur de ce rapport croit au-delà de 1,3, cette amplitude diminue lentement.

Un essai pratique a été réalisé au moyen d'un fauteuil dont le dossier était équipé d'une partie mobile ayant un poids de l'ordre de 1 kg, une suspension avec un coefficient de friction négligeable et un coefficient d'élongation d'un tiers de kilogramme par centimètre, soit 0,333 kg/cm ; l'assise du siège étant telle qu'elle provoquait un affaissement de l'ordre de 5 cm sous l'effet du poids d'un passager pesant 75 kg.

Si le coefficient de friction est négligeable, les fréquences propres se calculent au moyen de la relation suivante :

$$f(\text{sec}^{-1}) = 4{,}985 \times \sqrt{\frac{k\ (\text{kg/cm})}{m\ (\text{kg})}}$$

où la fréquence f est exprimée en nombre d'oscillations par seconde, le coefficient d'élongation k en kilogrammes par centimètre, et le poids de l'ensemble mobile m en kilogrammes.

Dans les conditions indiquées ci-dessus, la fréquence propre de la partie mobile a une valeur égale à 1,3 fois celle de la fréquence propre du siège chargé du passager de 75 kg. L'expérience a montré que cette partie mobile oscillait bien en phase et avec la même amplitude que le dos du passager.

Un autre essai a été effectué avec une partie mobile allégée jusqu'à un poids de 0,75 kg, tout en conservant la même suspension.

Le résultat sur le dos du passager était encore meilleur, c'est-à-dire que la partie mobile suivant encore plus parfaitement les oscillations du dos du passager ; ceci était notamment dû au fait que le rapport des fréquences propres valait dans ce cas 1,5.

Encore un autre essai a été effectué avec une partie mobile plus lourde jusqu'à environ 1,5 kg, tout en conservant la même suspension.

Le résultat de ce test n'était pas satisfaisant et une certaine friction avait lieu entre le dos et l'appui 5 contre lequel il s'appliquait.

Ceci était dû au fait que le rapport des fréquences propres était de 1,05.

Suite à ce dernier essai, le dossier a été amélioré en adoptant pour la partie mobile une suspension un peu moins souple ayant un coefficient d'élongation de 0,5 kg par cm. Ceci a ramené le rapport des fréquences propres à 1,3 et un résultat tout à fait satisfaisant a été obtenu dans des tests ultérieurs.

Pour effectuer les tests décrits ci-dessus il a été supposé que le coefficient de friction de la partie mobile du dossier était négligeable.

Il va bien entendu de soi qu'en pratique il n'est pas possible d'éviter une certaine friction.

Les résultats des tests montrent cependant que si la friction est faible, les considérations et conclusions ci-dessus restent valables.

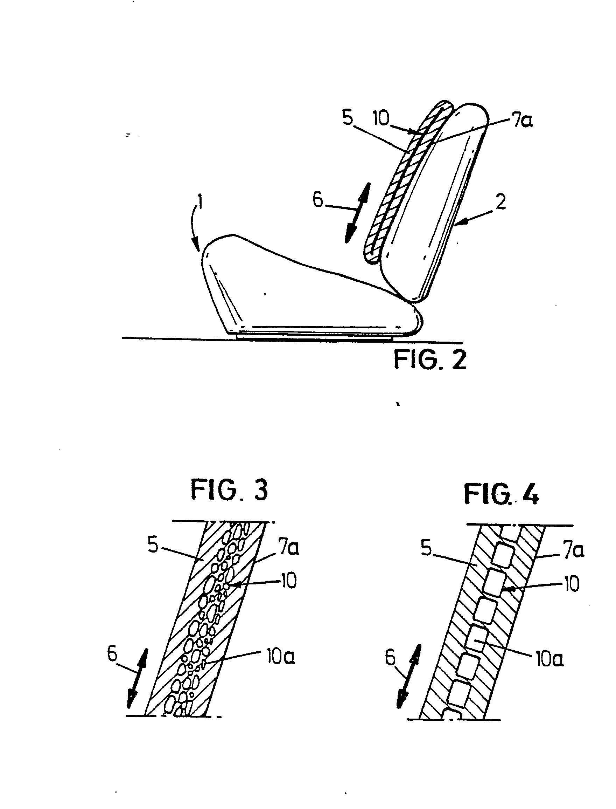

Une deuxième forme de réalisation du fauteuil suivant l'invention a été illustré par les figures 2 à 4.

Celle-ci consiste à fixer, p. ex. au moyen de sangles non représentées, un coussin 5, 10, 7a sur le dossier 2 du fauteuil. Ce coussin est relativement mince, de l'ordre de quelques centimètres d'épaisseur, et est de préférence fabriqué en une matière souple, p. ex. une mousse de caoutchouc ou synthétique de consistence appropriée.

Plus particulièrement, dans la forme de réalisation présentée aux figures 2 à 4, le coussin présente une couche extérieure 5 et une couche intérieure 7a en matière souple, s'étendant suivant ses grandes faces, et séparées l'une de l'autre par une couche intermédiaire 10 déformable dans un plan sensiblement parallèle auxdites faces, notamment suivant une direction située dans un plan approximativement vertical, tout en étant peu déformable suivant une direction approximativement horizontale sensiblement perpendiculaire auxdites couches.

La couche 7a est rendue solidaire du dossier 2, de sorte que la couche 5, contre laquelle le dos du passager s'applique, peut glisser par rapport à la couche 7a dans le sens des flèches 6. Ainsi, cette couche 5 constitue la partie mobile du dossier.

Les figures 3 et 4 montrent deux formes de réalisation particulières de la couche intermédiaire 10 permettant ce glissement. Ces figures représentent schématiquement une coupe suivant un plan perpendiculaire aux couches 5 et 7a.

Suivant la figure 3, la couche intermédiaire 10 présente de nombreuses bulles d'air occlus 10a, de sorte que, grâce à la réduction de la résistance au cisaillement de cette couche, le glissement a surtout lieu suivant la direction des flèches (6).

Par contre, l'air contenu dans les bulles étant occlus, le coussin présente une bonne résistance à la

3

compression suivant une direction perpendiculaire aux couches 5, 10 et 7a.

La figure 4 montre une couche intermédiaire 10 dans laquelle sont prévues des alvéoles sensiblement identiques et uniformément réparties. Les bulles ou alvéoles peuvent avoir une forme allongée dans le sens vertical, de façon à faciliter l'oscillation de la couche mobile 5 dans une direction approximativement verticale, par rapport aux oscillations dans des directions approximativement horizontales.

Suivant l'invention, la matière et la fabrication du coussin doivent être telles que le poids et la force de rappel de la couche mobile 5 donnent à cette dernière une fréquence propre supérieure à celle du siège chargé du passager, un rapport de fréquence préféré étant égal ou supérieur à 1,3.

En variante, au lieu de l'appui mobile monté sur des glissières, comme indiqué sur la figure 1, on peut envisager un appui constitué de deux feuilles souples de tissu synthétique approprié, ayant un très faible coefficient de friction mutuelle, l'une des deux feuilles étant fixée au dossier du siège de la voiture, et l'autre recouvrant la première, suspendue élastiquement au dossier, et recevant l'appui du dos du passager. Cette dernière feuille constitue l'appui mobile dont il est question dans la présente invention. Vu son faible poids, elle aura toujours une fréquence propre beaucoup plus élevée que celle du siège chargé du passager.

### Revendications

1. Fauteuil pour véhicule, notamment automobile, comprenant un siège (1) et un dossier (2), dont au moins la partie, contre laquelle repose le dos (4) d'un passager prenant place dans le fauteuil, présente un appui (5) monté de manière à pouvoir osciller ensemble avec le dos (4) de ce passager, sensiblement suivant le plan du dossier et dans une direction ascendante et descendante (6) par rapport au siège, ce fauteuil étant caractérisé par le fait que la partie mobile (5, 10) du dossier (2), comprenant l'appui (5) précité, présente une fréquence propre qui soit au moins égale à 1,3 fois la fréquence propre du siège (1) chargé du passager.

2. Fauteuil suivant la revendication 1, caractérisé en ce que l'appui oscillant (5) est monté par l'intermédiaire d'une suspension (8) à coefficient de friction négligeable, sur un support fixe (7) du dossier (2).

3. Fauteuil suivant la revendication 1, caractérisé en ce qu'il comprend, rapporté sur le dossier, un coussin plat, présentant une couche extérieure (5) et une couche intérieure (7a) en matière souple, s'étendant suivant les grandes faces de ce coussin, ces couches étant séparées l'une de l'autre par une couche intermédiaire (10) déformable suivant une direction sensiblement verticale (6), c'est-à-dire parallèle auxdites faces et peu déformable suivant les directions perpendiculaires aux dites faces, la couche intérieure (7a) étant fixée sur le dossier (2) du fauteuil et la couche extérieure (5) constituant la partie mobile du dossier.

4. Fauteuil suivant la revendication 3, caractérisé en ce que la couche intermédiaire (10) présente des bulles ou des alvéoles (10a) dont les dimensions et la concentration, sont telles que la couche extérieure (5), constituant la partie mobile du dossier (2) peut osciller dans une direction sensiblement verticale.

5. Fauteuil suivant la revendication 1, caractérisé en ce que la face du dossier (2) sur laquelle s'appuie le dos (4) du passager présente deux feuilles souples superposées ayant un faible coefficient de friction mutuelle, l'une des feuilles étant fixée au dossier (2) et l'autre feuille, recouvrant la première, étant suspendue élastiquement au dossier et constituant la partie mobile précitée.

### Claims

1. A seat for a vehicle, in particular a motor vehicle, comprising a seat (1) and a seatback (2), of which at least one part, against which the back (4) of a passenger seated in the seat makes contact, has a support (5) mounted so as to be able to oscillate, together with the back (4) of the passenger, substantially in the plane of the seatback and in an ascending and descending direction (6) in relation to the seat, the seat being characterised in that the movable part (5, 10) of the seatback (2), comprising said support (5), has a natural frequency which is at least equal to 1.3 times the natural frequency of the seat (1) laden with the passenger.

2. A seat according to claim 1, characterised in that the oscillatable support (5) is mounted, by intermediate suspension means (8) having a negligible coefficient of friction, on a fixed structure (7) of the seatback (2).

3. A seat according to claim 1, characterised in that there is provided, fitted on the seatback, a flat cushion having an outer layer (5) and an inner layer (7a) formed of flexible material and extending over the large surfaces of the cushion, the layers being separated from one another by an intermediate layer (10) which is deformable in a substantially vertical direction (6), i. e. parallel to said surfaces and being not very deformable in directions perpendicular to said surfaces, the inner layer (7a) being secured to the seatback (2) and the outer layer (5) forming the movable part of the seatback.

4. A seat according to claim 3, characterised in that the intermediate layer (10) has bubbles or cells (10a), the dimensions and concentrations of which are such that the outer layer (5) forming the movable

4

part of the seatback (2) can oscillate in a substantially vertical direction.

5. A seat according to claim 1, characterised in that the surface of the seatback (2), against which the back (4) of the passenger makes contact, has two superimposed flexible sheets having a low coefficient of friction relative to one another, one of the sheets being secured to the seatback (2) and the other sheet, covering the first sheet, being suspended elastically from the seatback and forming said movable part.

**Patentansprüche**

1. Sitz für ein Fahrzeug, insbesondere Kraftfahrzeug, mit einem Sitzteil (1) und einer Lehne (2), von welcher wenigstens derjenige Bereich, an welchen sich der Rücken (4) eines den Sitz einnehmenden Passagiers anlehnt, eine Stütze (5) aufweist, welche derart angebracht ist, daß sie zusammen mit dem Rücken (4) des Passagiers im wesentlichen entlang der Ebene der Lehne relativ zum Sitzteil in auf- und absteigender Richtung (6) bewegbar ist, wobei der Sitz dadurch gekennzeichnet ist, daß das die genannte Stütze (5) aufweisende bewegliche Teil (5, 10) der Lehne (2) eine Eigenfrequenz hat, welche wenigstens gleich dem 1,3 fachen der Eigenfrequenz des durch den Passagier belasteten Sitzteils (1) ist.

2. Sitz nach Anspruch 1, dadurch gekennzeichnet, daß die auf und ab bewegliche Stütze (5) unter Zwischenschaltung einer einen vernachlässigbaren Reibungekoeffizienten aufweisenden Aufhängung (8) an einem feststehenden Tragteil (7) der Lehne (2) gelagert ist.

3. Sitz nach Anspruch 1, dadurch gekennzeichnet, daß er ein an der Lehne angebrachtes flaches Polster aufweist, mit einer äußeren Lage (5) und einer inneren Lage (7a) aus einem schmiegsamen Werkstoff, welche sich über die großen Flächen des Polsters erstrecken und voneinander durch eine Zwischenlage (10) getrennt sind, welche in einer im wesentlichen senkrechten Richtung (6), d. h. parallel zu den genannten Flächen, verformbar und in zu den genannten Flächen lotrechten Richtungen nur wenig verformbar ist, wobei die innere Lage (7a) an der Lehne (2) des Sitzes befestigt ist und die äußere Lage (5) das bewegliche Teil der Lehne darstellt.

4. Sitz nach Anspruch 3, dadurch gekennzeichnet, daß die Zwischenlage (10) Blasen oder Zellen (10a) enthält, deren Abmessungen und Konzentration so gewählt sind, daß die das bewegliche Teil der Lehne (2) darstellende äußere Lage (5) in einer im wesentlichen senkrechten Richtung auf und ab bewegbar ist.

5. Sitz nach Anspruch 1, dadurch gekennzeichnet, daß die Fläche der Lehne (2), an welche sich der Rücken (4) des Passagiers anlehnt, zwei übereinander liegende und relativ zueinander einen kleinen Reibungskoeffizienten aufweisende, schmiegsame Folien aufweist, wobei die eine Folie an der Lehne (2) befestigt ist und die die zuerst Genannte überdeckende andere Folie elastisch an der Lehne aufgehängt ist und das genannte bewegliche Teil darstellt.

FIG. 1

FIG. 2

FIG. 3

FIG. 4